Europäisches Patentamt

European Patent Office

Office européen des brevets

(11) Numéro de publication: **0 133 148**
A2

# (12) DEMANDE DE BREVET EUROPEEN

(21) Numéro de dépôt: **84430028.5**

(22) Date de dépôt: **20.07.84**

(51) Int. Cl.⁴: **F 17 D 5/02**
**G 01 M 3/28**

(30) Priorité: **21.07.83 FR 8312231**

(43) Date de publication de la demande:
**13.02.85 Bulletin 85/7**

(84) Etats contractants désignés:
**AT BE CH DE FR GB IT LI LU NL SE**

(71) Demandeur: **C Q F D Société à Responsabilité Limitée dite :**
**27 boulevard Féraud**
**F-13003 Marseille(FR)**

(72) Inventeur: **Somnier, Michel**
**C1 le Ruissatel Les Hauts de Castel Roc**
**F-13010 Marseille(FR)**

(74) Mandataire: **Rinuy, Santarelli**
**14, avenue de la Grande Armée**
**F-75017 Paris(FR)**

(54) **Procédé et dispositif de contrôle de fuite sur un réseau de distribution de fluide.**

(57) L'invention concerne le contrôle de fuite sur un réseau de distribution de fluide.

Un dispositif selon l'invention comporte un capteur de pression (13) relié à un circuit de traitement (5) associé à un enregistreur (1); ce dernier permet une évaluation quantitative des fuites par traitement des données enregistrées.

FIG.2

EP 0 133 148 A2

## Procédé et dispositif de contrôle de fuite sur un réseau de distribution de fluide

La présente invention concerne le contrôle des fuites sur un réseau de distribution d'un fluide, liquide ou gazeux, tel que : air comprimé, eau chaude, fluide calorifique, gaz, hydrogène, oxygène, propane, acides.

Un tel contrôle s'effectue classiquement de la manière suivante : on isole d'abord la portion de réseau à contrôler, plus particulièrement les capacités qui peuvent être raccordées et on étanche les organes de sécurité tels que soupapes ; on ferme les organes de coupure du réseau à éprouver, le cas échéant ; après avoir choisi un point de raccordement du dispositif de contrôle à la portion de réseau à tester, on insuffle dans cette dernière du fluide d'épreuve sous pression. Si, après un temps prédéterminé, la pression au sein de cette portion de réseau a baissé, on en déduit qu'il y a des fuites. Une telle approche est essentiellement qualitative et ne permet guère de déceler que des fuites importantes, voire catastrophiques. Un tel contrôle est généralement effectué dans le cadre de tests normalisés qui conduisent, soit à l'homologation de la portion de réseau considérée, soit à son rejet.

La présente invention vise à pallier les inconvénients de ces contrôles en tout ou rien grâce à une évaluation quantitative des fuites sur des réseaux de distribution.

L'invention propose à cet effet un procédé de contrôle de fuite sur un réseau de distribution d'un fluide, selon lequel on isole une portion de réseau à contrôler et on la remplit d'un fluide d'épreuve sous pression afin de déceler, grâce aux indications d'un capteur de pression, la présence d'une fuite, caractérisé en ce que l'on traite les indications de pression dudit capteur de pression, et on enregistre leur évolution au cours du temps en vue d'une évaluation quantitative des fuites de fluide.

Ce procédé de mise sous pression au gaz trouve donc son originalité, selon l'invention, dans le fait que l'on enregistre, pendant un temps variable approprié, suivant les paramètres de contrôle considérés (pression, qualité, volume, fluide transporté dans le réseau...)

l'évolution de la pression à l'intérieur de la portion de réseau considéré.

L'enregistrement permet d'apprécier, en cas de fuite, la pente de la courbe enregistrée correspondant à la chute de pression. Cette pente donne un pourcentage de fuite à partir duquel peuvent être évaluées les pertes du produit véhiculé. Une telle évaluation peut se faire, en première approximation, à l'aide de la loi classique des gaz parfaits : P.V/T = constante (loi de MARIOTTE) où P est la pression, V le volume et T la température en degrés Kelvin. En effet, sachant que V est constant en l'absence de fuites, à température constante, P doit être constant. A partir du moment où P varie, cette variation permet par un calcul mathématique simple de définir la perte de produit soumis à l'épreuve en suivant l'évolution de P en fonction du temps.

Ainsi $\dfrac{\Delta P \ (P \ initial - P \ final)}{\Delta t \ (\text{évolution du temps})}$ $\cdot \Delta V \ (V \ initial - V \ final) = kV \ initial$

où k est le coefficient de perte.

L'invention permet donc d'avoir la valeur de k qui est la quantité du fluide perdu en fonction du temps et du volume initial soumis à l'épreuve.

Préalablement à l'enregistrement de l'évolution éventuelle de P, on enregistre la quantité du fluide nécessaire au remplissage du réseau soumis à l'épreuve jusqu'à la mise sous pression d'épreuve (P initial).

On a ainsi défini la valeur exacte de V initial (volume sous épreuve).

Connaissant le coût du fluide véhiculé et le débit nominal de l'installation, il est aisé de définir pour le fonctionnement du réseau une enveloppe financière, tout particulièrement intéressante dans le cadre des économies d'énergie, dans l'industrie et le bâtiment notamment.

A cette évaluation économique, s'ajoute bien entendu, et c'est essentiel dans le cas d'une distribution d'un produit classé comme dangereux, la possibilité de définir avec précision le coefficient d'insécurité de l'installation.

Pour la mise en oeuvre du procédé précité, l'invention propose un dispositif de contrôle de fuite dans un réseau de distribution de fluide, du genre comportant un capteur de pression à placer dans un tronçon de réseau à contrôler préalablement isolé, caractérisé en ce qu'un circuit de traitement est associé audit capteur, lequel circuit alimente un enregistreur adapté à relever l'évolution au cours du temps des signaux fournis par le capteur de pression.

On comprend aisément qu'un tel dispositif ne peut être utilisable qu'à condition de disposer d'un matériel permettant des mesures précises de pression. Il reste néanmoins avantageux de prévoir un manomètre à lecture directe, bien que moins précis, d'une part à titre de contrôle grossier, d'autre part en vue de pouvoir procéder, en cas de mauvaises conditions (panne de courant par exemple), à une première estimation grossière des fuites.

De préférence, un dispositif selon l'invention comporte un lecteur optique dont la sensibilité, dans un dispositif standard, est par exemple de l'ordre du 1/100e de bar, de manière à permettre de déterminer si les variations de pression sont dues aux conditions atmosphériques, ou à des pertes vraies de fluide. En outre, la précision de l'appareillage de mesure de pression sera avantageusement de l'ordre de 1/10e de bar, ce qui est considéré comme seuil plancher en cas de perte de fluide. Quant à l'échelle de lecture de l'enregistreur, elle est de préférence suffisante pour apprécier, pendant la durée de l'enregistrement, une variation de pression de 5 %.

Du point de vue maniement, l'invention préconise un dispositif de contrôle  transportable et robuste, éminemment fiable dans le temps.

Un dispositif selon l'invention satisfait bien sûr aux normes de sécurité en vigueur et présente : une entrée bouteille avec détendeur réglable et robinet d'arrêt ; une sortie réseau pouvant être isolée ; une purge ; et une étanchéité totale de ses circuits de gaz. Du point de vue électrique, un appareil selon l'invention est couramment alimenté en courant alternatif 110 V ou 220 V, avec une protection électrique du type IP 44.

Dans le cas de contrôles définis par l'Arrêté du 2 août 1977 relatif aux règles techniques et de sécurité, applicables aux installations de gaz combustible et d'hydrocarbure liquéfiés situés à l'intérieur des bâtiments d'habitation ou de leurs dépendances, on utilise cet appareil suivant les conditions ci-après :

| Nature du gaz distribué | Pression de service | Pression d'épreuve |
|---|---|---|
| Gaz distribué par réseau | 0,4 bar < P ≤ 4 bars | 0,4 bar |
| | P ≤ 0,4 bar | P |
| Gaz distribué par récipient | Avant détente finale | 1,5 x P avec minimum de 3 bars |

D'autres objets, caractéristiques et avantages de l'invention ressortent de la description qui suit, donnée à titre non limitatif en regard des dessins annexés, sur lesquels :

- la figure 1 est un schéma des circuits de fluide d'un dispositif de contrôle selon l'invention ;

- la figure 2 est un schéma électrique du dispositif de la figure 1 ;

- la figure 3 est une vue de la façade d'un coffret contenant le dispositif de la figure 1.

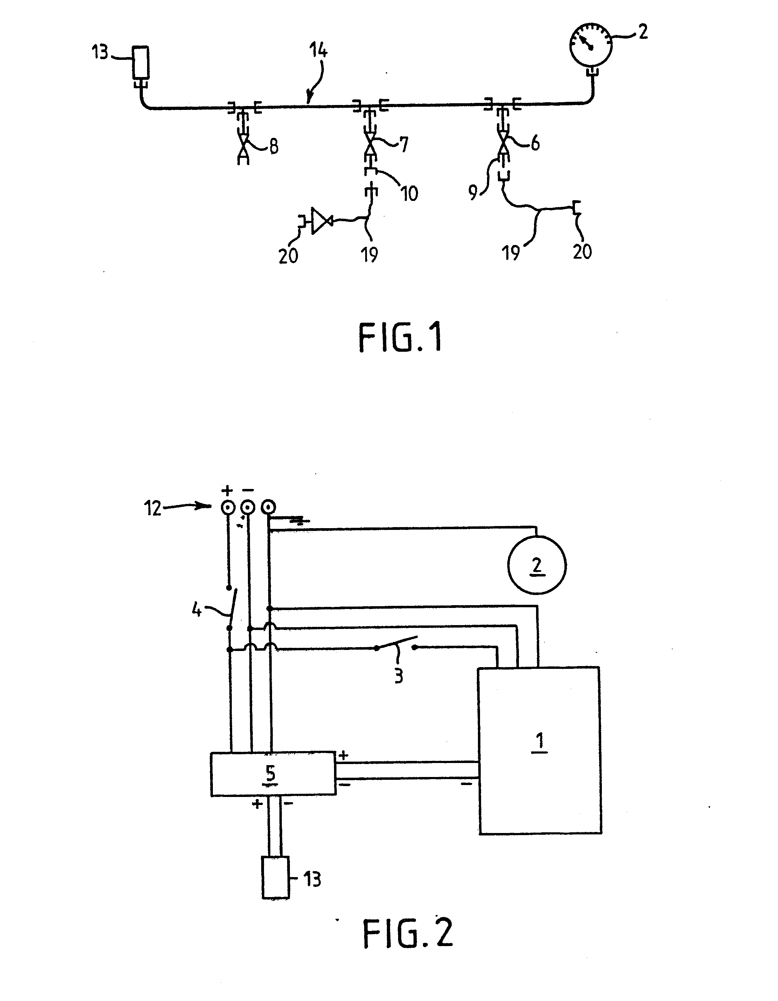

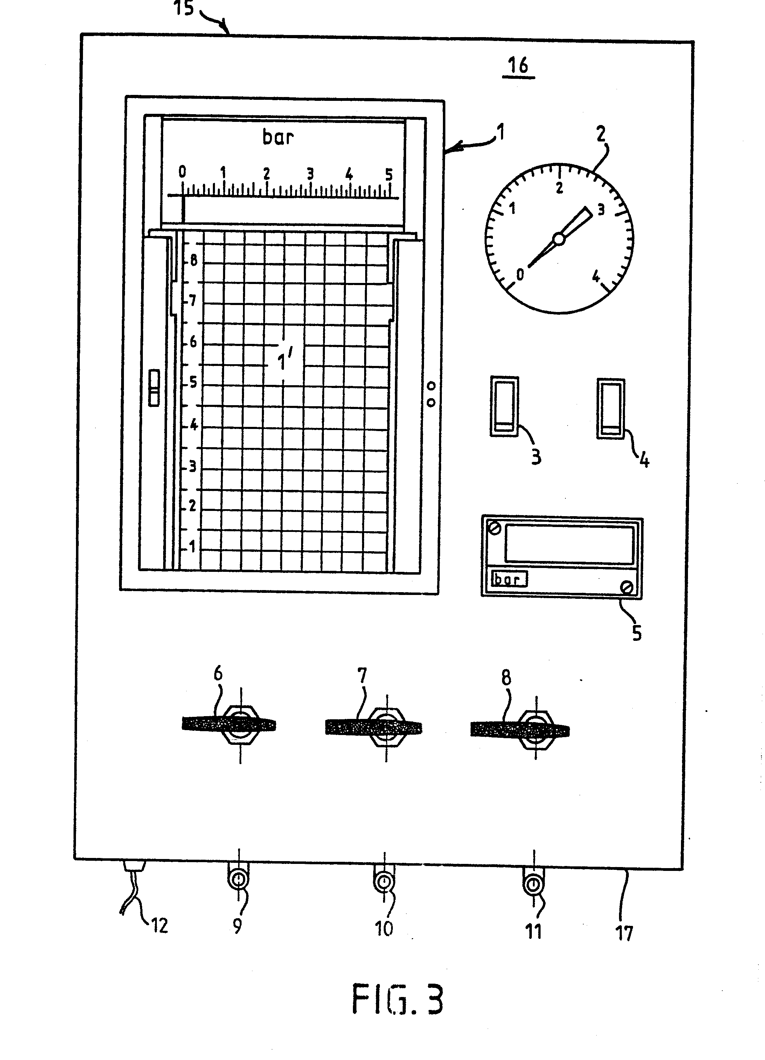

Dans l'exemple de réalisation représenté aux figures 1 et 3 , un dispositif selon l'invention comporte essentiellement un capteur, ou sonde, de pression 13 auquel est associé un indicateur numérique de pression 5 muni d'un interrupteur de mise en marche 3. Cet indicateur 5, sert à décoder les indications de la sonde 13, et permet de préférence une lecture au 1/100e de bar.

A cet indicateur est associé un enregistreur 1, muni d'un interrupteur 4 de défilement de bande, et équipé d'une bande enregistreuse 1' qui permet avantageusement de conserver une trace matérielle de chaque contrôle. La sensibilité et l'échelle de cet enregistreur 1 sont de préférence adaptées pour permettre la lecture d'une baisse de pression de 1/10e de bar en une heure. Les capacités de décalage et de défilement de bande de cet enregistreur permettent de préférence d'observer une variation de pression de 5 % pendant la durée de l'épreuve.

Un manomètre 2 à lecture directe est avantageusement disposé en parallèle avec la sonde de pression afin de permettre, notamment, d'effectuer des contrôles, même grossiers, en cas d'absence de courant, selon la procédure classique connue.

Le dispositif comporte en outre un embout 9 de raccordement au réseau ainsi qu'un embout 10 de raccordement, le cas échéant, à la source de fluide d'épreuve, par exemple une bouteille de gaz comprimé. A ces embouts 9 et 10 sont associés des robinets 6 et 7, respectivement. Un embout de purge 11 et son robinet d'arrêt associé 8 sont en outre prévus. Les embouts de raccordement 9 et 10 sont adaptés à recevoir des flexibles de liaison 19 munis de raccords rapides 20 étanches aux gaz.

Divers éléments tubulaires, désignés sous la référence générale 14, assurent les liaisons appropriées entre les divers organes précités, et constituent le circuit-gaz interne du dispositif de contrôle. Il s'agit par exemple de tronçons flexibles, étanches aux gaz.

Sous la référence générale 12 sont désignés les fils d'alimentation électrique (+, -, terre).

La figure 3 illustre un mode de présentation du dispositif précédemment décrit. L'ensemble des éléments précédemment mentionnés sont disposés au sein d'un coffret 15, par la façade avant 16 de ce dernier sont accessibles les cadrans de l'enregistreur 1 et du manomètre 2, les interrupteurs de mise en marche correspondants 3 et 4, le cadran de l'indicateur numérique de pression 5, ainsi que les clés des robinets 6, 7 et 8. Au travers de la face inférieure 17 débouchent les fils 12 d'alimentation électrique ainsi que les embouts de raccordement 9 et 10 et l'embout de purge 11. Le capteur de pression 13 est entièrement disposé à l'intérieur du coffret.

Le coffret 15 est de préférence métallique, avec des dimensions de préférence inférieures à (0,5 m x 0,4 m x 0,4 m). Le coffret est avantageusement muni de deux poignées latérales (non représentées) pour en faciliter le transport, ainsi que d'un couvercle de protection (non représenté), amovible, destiné à la protection de l'instrumentation portée par la façade 16. Des logements sont avantageusement prévus au sein de ce couvercle pour loger les flexibles 19, lorsque ceux-ci sont de taille suffisamment faible.

La mise en oeuvre du dispositif représenté aux figures 1 à 3 à titre d'exemple s'effectue comme suit :

a) on isole et on étanche les diverses capacités, soupapes et purges que comporte le tronçon de réseau de distribution à contrôler ; on ferme les organes de coupure dudit tronçon à éprouver, et on choisit le point de raccordement audit tronçon ;

a') dans le cas d'un réseau de distribution de fluide classé comme dangereux, on effectue en outre une vidange du tronçon de réseau à éprouver et on purge à l'aide d'un gaz neutre ;

b) on met sous tension le dispositif par branchement des fils 12 sur le secteur d'alimentation électrique disponible ;

c) on agit sur l'interrupteur 3 pour mettre en marche l'indicateur numérique de pression ; et on en attend la stabilisation sans gaz ;

d) on branche les flexibles de raccordement 19 au réseau à tester, et à la source d'alimentation en fluide d'épreuve et aux embouts 9 et 10 du dispositif ; on ouvre les robinets 7 et 8 correspondants et on ferme, le cas échéant, le robinet de purge 8 ;

e) on envoie la pression requise pour l'appréciation des fuites, définies éventuellement par les normes DTU, ou par des arrêtés appropriés concernant le fluide transporté au réseau;

f) on coupe l'alimentation en fluide d'épreuve par fermeture du robinet 7 ; le tronçon de réseau à tester, le flexible 19 monté sur l'embout 9 et le circuit-gaz 14 interne du dispositif définissent une enceinte isolée dont on va observer l'évolution de la pression au cours du temps ;

g) on laisse se stabiliser l'aiguille de l'enregistreur 1 pendant 10 minutes environ ;

h) on met en marche le défilement de la bande enregistreuse par action sur l'interrupteur 4 ; et

i) on laisse l'enregistrement se poursuivre pendant le temps requis, une heure par exemple.

Pour l'arrêt du dispositif, on stoppe le défilement de la bande enregistreuse par action sur l'interrupteur 4, on stoppe l'alimentation de l'indicateur numérique de pression par l'interrupteur 3, on ferme le robinet d'alimentation en gaz, on coupe le courant, on purge par ouverture du robinet 8, et on débranche les flexibles 9 et 10. Le contrôle est terminé.

Il va de soi que l'exemple de réalisation qui vient d'être décrit, tant du point de vue procédé, que du point de vue appareillage, n'a été proposé qu'à titre d'illustration préférée, et que de nombreuses variantes et adaptations peuvent être proposées par l'homme de l'art sans sortir du cadre général de l'invention.

Ainsi, notamment, un dispositif selon l'invention, dans une version extrêmement simplifiée, peut se limiter à une sonde de pression, un élément de traitement de ses signaux (notamment filtrage des parasites) ne donnant lieu à aucune conversion analogique-numérique ni affichage, comme dans le cas d'un indicateur numérique de pression, relié à un enregistreur. L'affichage numérique de la pression ne constitue qu'une caractéristique avantageuse mais non nécessaire. A l'inverse, on peut prévoir seulement un affichage numérique, l'enregistrement se faisant manuellement : cela peut permettre un gain sensible d'encombrement.

L'enregistreur peut ne pas se faire graphiquement mais par relevé de la valeur exacte, introduit en mémoire. A l'appareil peut-être ajouté un compteur volumétrique dont la fonction sera de mesurer le volume du réseau. Ces deux paramètres renvoyés à un microprocesseur judicieusement programmé, permettront d'avoir instantanément l'évaluation quantitative des fuites.

De même, au voisinage d'un réseau à contrôler fréquemment, on peut prévoir un dispositif fixe de contrôle.

Il va de soi que la présente invention n'a été décrite qu'à titre purement explicatif et nullement limitatif et que toute modification utile pourra y être apportée sans sortir de son cadre.

## REVENDICATIONS

1. Procédé de contrôle de fuite sur un réseau de distribution de fluide, selon lequel on isole une portion de réseau à contrôler et on la remplit d'un fluide d'épreuve sous pression afin de déceler, grâce aux indications d'un capteur de pression, la présence d'une fuite, caractérisé en ce que l'on traite les indications de pression dudit capteur de pression (13), et on enregistre leur évolution au cours du temps en vue d'une évaluation quantitative des fuites de fluide.

2. Dispositif de contrôle de fuite sur un réseau de distribution de fluide, du genre comportant un capteur de pression à placer dans un tronçon de réseau à contrôler préalablement isolé, caractérisé en ce qu'un circuit de traitement (5) est associé audit capteur (13), lequel circuit alimente un enregistreur (1) adapté à relever l'évolution au cours du temps des signaux fournis par le capteur de pression (13).

3. Dispositif selon la revendication 2, caractérisé en ce que le circuit de traitement (5) comporte un convertisseur analogique-numérique pour affichage numérique de la pression instantanée.

4. Dispositif selon la revendication 2 ou la revendication 3, caractérisé en ce qu'à l'enregistreur est associé un microprocesseur adapté pour mémoriser le volume sous épreuve et à assurer l'évaluation quantitative des fuites.

5. Dispositif selon la revendication 2 ou la revendication 3, caractérisé en ce que l'enregistreur (1) est un enregistreur à bande (1').

6. Dispositif selon l'une quelconque des revendications 2 à 5, caractérisé en ce qu'il comporte en outre un manomètre (2) à lecture directe relié au capteur de pression (13).

7. Dispositif selon l'une quelconque des revendications 2 à 6, caractérisé en ce qu'il est contenu dans un coffret portable (15) comportant une face d'instrumentation (16) par laquelle est accessible l'enregistreur, et une face de branchement (17) présentant des embouts (9, 10) et des robinets (6, 7) de raccordement au tronçon de réseau à contrôler et à une source de fluide d'épreuve et des fils (12) d'alimentation électrique.

8. Dispositif selon la revendication 7, caractérisé en ce que le coffret (15) comporte un couvercle de protection de la face d'instrumentation (16).

9. Dispositif selon la revendication 7 ou la revendication 8, caractérisé en ce qu'il comporte en outre des flexibles (19) pour le raccordement des embouts (9, 10) au réseau et à la source de fluide d'épreuve.

10. Dispositif selon l'une quelconque des revendications 7 à 9, caractérisé en ce qu'il comporte en outre un embout (11) et un robinet (8) de purge.

11. Dispositif selon l'une quelconque des revendications 2 à 10 caractérisé par le fait qu'il comporte en outre un compteur volumétrique adapté pour mesurer le volume du réseau à éprouver.

FIG.1

FIG.2

0133148

FIG.3